# FASCICULE DE BREVET EUROPEEN

(11) **EP 2 764 569 B1**
(45) Date de publication et mention de la délivrance du brevet: **28.11.2018**
(21) Numéro de dépôt: 12772759.2
(22) Date de dépôt: 05.10.2012
(51) Int. Cl.: C04B 35/447, C04B 35/486, C04B 35/50, C04B 35/624, C04B 35/626, C04B 41/00, C04B 41/52, C04B 41/89, B82Y 30/00, H01M 8/1246, C04B 111/00

(54) **PROCÉDÉ DE PRÉPARATION D'UN MATERIAU SUR UN SUBSTRAT PAR VOIE SOL-GEL**
VERFAHREN ZUR HERSTELLUNG EINES MATERIALS AUF EINEM SUBSTRAT MITTELS EINES SOL-GELS
METHOD FOR PREPARING A MATERIAL ON A SUBSTRATE BY SOL-GEL MEANS

(30) Priorité: 07.10.2011 FR 1159080
(43) Date de publication de la demande: 13.08.2014
(73) Titulaire: Commissariat à l'Énergie Atomique et aux Énergies Alternatives, 75015 Paris (FR)
(72) Inventeur: BOY, Philippe, F-37300 Joue Les Tours (FR); COURTIN, Emilie, F-76600 Le Havre (FR); PIQUERO, Thierry, F-37230 Fondettes (FR); BILLER, Agnès, F-37550 Saint Avertin (FR)
(74) Mandataire: Ahner, Philippe
(86) Numéro de dépôt international: PCT/EP2012/069765
(87) Numéro de publication internationale: WO 2013/050557

(56) Documents cités:
- ROSE ET AL: "Application of sol gel spin coated yttria-stabilized zirconia layers for the improvement of solid oxide fuel cell electrolytes produced by atmospheric plasma spraying", JOURNAL OF POWER SOURCES, ELSEVIER SA, CH, vol. 167, no. 2, 17 avril 2007 (2007-04-17), pages 340-348, XP022032213, ISSN: 0378-7753, DOI: 10.1016/J.JPOWSOUR.2007.01.081
- BARDAINE A ET AL: "Influence of powder preparation process on piezoelectric properties of PZT sol-gel composite thick films", JOURNAL OF SOL-GEL SCIENCE AND TECHNOLOGY, KLUWER ACADEMIC PUBLISHERS, BO, vol. 48, no. 1-2, 25 juillet 2008 (2008-07-25), pages 135-142, XP019646211, ISSN: 1573-4846, DOI: 10.1007/S10971-008-1809-X
- DAUCHY F ET AL: "Patterned crack-free PZT thick films for micro-electromechanical system applications", THE INTERNATIONAL JOURNAL OF ADVANCED MANUFACTURING TECHNOLOGY, SPRINGER, BERLIN, DE, vol. 33, no. 1-2, 16 mars 2007 (2007-03-16), pages 86-94, XP019511395, ISSN: 1433-3015, DOI: 10.1007/S00170-007-0968-1
- PATIL D S ET AL: "Eight mole percent yttria stabilized zirconia powders by organic precursor route", CERAMICS INTERNATIONAL, ELSEVIER, AMSTERDAM, NL, vol. 34, no. 5, 1 juillet 2008 (2008-07-01), pages 1195-1199, XP022666981, ISSN: 0272-8842, DOI: 10.1016/J.CERAMINT.2007.02.013 [extrait le 2008-05-15]
- Lei Zhang ET AL: "Effect of Pre-sintering Treatment of Anode Substrate on the Densification and Flatness of YSZ Electrolyte by Suspension Spray", ECS Transactions, 1 January 2009 (2009-01-01), pages 543-551, XP055275975, DOI: 10.1149/1.3205565
- BAO W ET AL: "Effect of NiO/YSZ compositions on the co-sintering process of anode-supported fuel cell", JOURNAL OF MEMBRANE SCIENCE, ELSEVIER BV, NL, vol. 259, no. 1-2, 15 August 2005 (2005-08-15), pages 103-109, XP027869489, ISSN: 0376-7388 [retrieved on 2005-08-15]
- JAE-HA MYUNG ET AL: "Fabrication and characterization of planar-type SOFC unit cells using the tape-casting/lamination/co-firing method", INTERNATIONAL JOURNAL OF HYDROGEN ENERGY, ELSEVIER SCIENCE PUBLISHERS B.V., BARKING, GB, vol. 37, no. 1, 3 September 2011 (2011-09-03), pages 498-504, XP028348501, ISSN: 0360-3199, DOI: 10.1016/J.IJHYDENE.2011.09.011 [retrieved on 2011-10-22]
- GUOSHENG YE ET AL: "Single-step co-firing technique for SOFC fabrication", CERAMIC ENGINEERING AND SCIENCE PROCEEDINGS, WILEY ONLINE LIBRARY, vol. 26, no. 4, 2005, pages 25-32, XP009190261, ISSN: 1940-6339, DOI: 10.1002/9780470291245.CH [retrieved on 2008-03-05]

## Description

### DOMAINE TECHNIQUE

La présente invention a pour objet un procédé de préparation d'un matériau à base d'oxyde(s) d'élément(s) métallique(s) sur un substrat par voie sol-gel, tel que des matériaux à base d'oxyde (s) de métaux de transition et/ou de lanthanide (s) comme des matériaux à base d'oxyde(s) choisi(s) parmi l'oxyde de cérium et gadolinium, l'oxyde de cérium, la zircone dopée par l'yttrium (intitulée YSZ), la zircone dopée par le scandium (intitulée ScSZ), des oxydes apatites.

Le domaine technique de l'invention peut être défini, de manière générale, comme celui de la préparation de matériaux céramiques, en particulier de la préparation de matériaux se présentant sous forme de films d'oxyde(s) d'élément(s) métallique(s) sur des substrats, notamment des substrats céramiques éventuellement poreux.

L'invention s'applique en particulier à la préparation de matériaux d'électrolytes denses, de faible épaisseur, du type oxyde mixte, tels que des matériaux en zircone dopée par l'yttrium (dénommé ci-après YSZ), qui peuvent notamment être utilisés pour leur conductivité ionique élevée et leur haute stabilité chimique et mécanique dans les piles à combustible à oxyde solide (« *Solid Oxide Fuel Cells* » ou SOFC en terminologie anglaise) ou encore les électrolyseurs fonctionnant à haute température (notamment à des températures supérieures à 800°C).

### ÉTAT DE LA TECHNIQUE ANTÉRIEURE

La préparation de matériaux à base d'oxyde(s) d'élément(s) métallique(s) peut être effectuée par des procédés pouvant être regroupés en deux catégories : d'une part, les procédés par voie sèche, et d'autre part, les procédés par voie humide.

La catégorie des procédés par voie sèche peut être scindée en plusieurs sous-catégories : les procédés en phase vapeur, en phase plasma et en phase solide.

Pour les procédés mettant en jeu une phase vapeur, le procédé le plus communément utilisé est l'évaporation, dans laquelle les oxydes d'élément(s) métallique(s) à déposer sont placés dans un creuset porté à une température suffisante pour que des vapeurs se forment et se condensent sous la forme d'un revêtement, ou couche, sur un substrat refroidi.

Pour les procédés se déroulant en phase plasma, on peut citer la pulvérisation cathodique. Cette technique met en oeuvre un bombardement du ou des oxydes d'élément(s) métallique(s) à déposer, par des ions générés par un plasma. Le transfert de l'énergie cinétique de ces ions aux atomes des oxydes à déposer entraîne la projection à grande vitesse de ces atomes sur le substrat à revêtir, permettant un dépôt sous la forme d'un revêtement ou couche.

S'agissant des procédés mettant en jeu une phase solide, citons la décomposition de composés organométalliques, qui consiste en la décomposition thermique de ces composés à une température suffisante pour produire une élimination des produits organiques formés durant cette décomposition, et une céramisation.

Ces procédés en phase vapeur, phase plasma et phase solide nécessitent toutefois la mise en oeuvre de températures très élevées (généralement supérieures à 1000°C) et l'utilisation d'équipements réfractaires.

Les procédés de fabrication de matériaux du type susmentionné par voie liquide, en particulier le procédé de coulage en bande (« *tape casting* » en terminologie anglaise), le procédé de sérigraphie et le procédé sol-gel, permettent de contourner ces inconvénients.

Le procédé de coulage en bande fait intervenir la mise en suspension de poudres céramiques dans un milieu généralement non aqueux et pouvant comprendre de nombreux additifs, tels que des liants organiques ou des agents dispersants, assurant respectivement une cohésion et une stabilité de la suspension. L'ensemble constitué de la suspension et des additifs, également appelé « barbotine » de coulage en bande, est alors déposé sur une surface et nivelé au moyen d'une racle.

Ce procédé présente toutefois plusieurs difficultés liées à l'épaisseur des couches céramiques obtenues. En effet, cette technique de revêtement de substrats ne permet pas l'obtention de couches d'épaisseur inférieure à la dizaine de µm, nécessaire par exemple pour la conception d'électrolytes de SOFC pouvant être utilisés à des températures de fonctionnement plus modérées (700-800°C). D'autre part, ce procédé s'adapte peu à des substrats de géométrie complexe.

Le procédé de sérigraphie, quant à lui, consiste à préparer une encre et à déposer cette dernière sur un support, ce procédé présentant les inconvénients suivants :
- l'encre peut présenter une viscosité trop importante pour pouvoir être déposée par des techniques de dépôt, telles que le trempage-retrait ;
- il est peu adapté à la réalisation de couche(s) sur des surfaces complexes.

Le procédé sol-gel consiste, classiquement, quant à lui, en la préparation préalable d'une solution contenant des précurseurs de céramiques oxydes à l'état moléculaire (composés organométalliques, sels métalliques), formant ainsi un sol (également appelé solution sol-gel). Dans un deuxième temps, ce sol est déposé, sous la forme d'un film, sur un substrat. Au contact de l'humidité ambiante, les précurseurs s'hydrolysent et se condensent, formant ainsi un réseau d'oxyde emprisonnant le solvant et aboutissant à un gel. La couche de gel formant un film est ensuite soumise à une étape de traitement thermique, de façon à former un film en céramique.

Le procédé sol-gel présente des avantages appréciables par rapport aux procédés explicités précédemment :
- il permet la réalisation de revêtements sur des surfaces de géométrie complexe ;
- il permet l'obtention de dépôts homogènes en épaisseur et en composition ;
- le mélange des espèces s'effectuant à l'échelle moléculaire, ce procédé permet de préparer des oxydes complexes comportant, par exemple, trois éléments ou plus.

Une technique de dépôt particulièrement avantageuse pour les sols est la technique dite de trempage-retrait (« *dip coating* » en terminologie anglaise), technique pouvant être découpée en quatre étapes : l'immersion du substrat dans le sol, le retrait du substrat du sol avec une vitesse contrôlée laissant subsister sur le substrat une couche de sol, l'écoulement du sol depuis le substrat, et enfin, l'évaporation du solvant.

Toutefois, le dépôt de couches par procédé sol-gel mis en oeuvre notamment par la technique de revêtement par trempage-retrait permet difficilement d'atteindre des épaisseurs supérieures au micromètre. Ce procédé conduit en général à des épaisseurs maximales de 250 nm en monocouche, rendant impossible l'obtention de couches d'oxyde d'épaisseur supérieure sans procéder à plusieurs dépôts successifs.

Un autre inconvénient des procédés sol-gel réside dans la difficulté de dépôt de couches minces denses, homogènes et d'épaisseur suffisante sur un substrat poreux, tel que NiO-YSZ qui est le matériau d'anode des SOFC actuellement commercialisées. Dans le cas où ces substrats présentent une porosité ouverte, une infiltration du sol par capillarité dans les pores du substrat est généralement observée lors du dépôt.

Dans le but de remédier aux inconvénients précédemment mentionnés, c'est-à-dire réaliser le dépôt de couches d'oxyde(s) d'épaisseur supérieure au micromètre, tout en évitant une pénétration de la solution sol-gel à l'intérieur du substrat poreux, certains auteurs ont proposé l'utilisation, comme solution de dépôt, d'une dispersion comprenant en tant que milieu continu de dispersion une solution sol-gel précurseur d'une céramique oxyde, et en tant que phase dispersée, l'association d'une poudre de ladite céramique oxyde et d'une matrice polymérique faisant office d'agent de cohésion de ladite solution sol-gel.

Ainsi, Gaudon et al. dans le document FR 2 856 397 [1], décrivent un procédé de préparation d'un revêtement à base de zircone dopée par l'yttrium (YSZ) présentant une épaisseur supérieure ou égale à 40 µm. Ce procédé comprend successivement :
- la préparation, dans une première étape, d'une solution sol-gel comprenant une poudre d'oxyde d'élément métallique (typiquement, l'oxyde YSZ) et un dispersant (typiquement, un composé organique de type phosphate-ester) dans un milieu liquide (typiquement, un mélange de solvants éthanol/méthyléthylcétone dans les proportions 60/40 en volume) ;
- l'addition à ladite solution sol-gel, dans une seconde étape, d'une solution d'au moins un agent de cohésion organique (typiquement, l'agent obtenu par réaction de polymérisation entre l'hexaméthylènetétramine (intitulé HMTA) et l'acétylacétone (intitulé acac)) dans un solvant (typiquement, l'acide acétique), conduisant à une dispersion (qui peut être qualifiée du terme « composite ») ;
- le dépôt d'une couche de ladite dispersion sur un substrat de type Ni-YSZ par technique de trempage-retrait, suivi d'une étape de séchage et d'un traitement thermique approprié.

L'utilisation de telles dispersions de nature composite est encore illustrée dans la littérature pour le dépôt de couches épaisses (d'épaisseur bien supérieure au micromètre, typiquement supérieure à 20 µm) par technique de trempage-retrait. Citons par exemple les auteurs Lenormand et al. dans « Journal of the European Ceramic Society », 25 (2005), pages 2643-2646 [2], qui décrivent la réalisation de dépôts de couches céramiques YSZ d'épaisseur comprise entre 10 et 25 µm. Plus récemment encore, les auteurs Viazzi et al. dans « Journal of Power Sources », 196 (2011), pages 2987-2993 [3], réalisent des dépôts de couches d'épaisseur comprise entre 25 et 45 µm en mettant en oeuvre cette même technique de trempage-retrait.

L'article "Application of sol gel spin coated yttria-stabilized zirconia layers for the improvement of solide oxide fuel cell electrolytes produced by atmospheric plasma spraying" des auteurs Rose et al. dans "Journal of Power Source", 167 (2007), pages 340-348, s'intéresse à l'utilisation de solutions sol gel précurseurs d'YSZ appliquées par spin coating afin de remplir les pores présents dans des couches d'YSZ appliquées par plasma.

L'article "Influence of powder preparation process on piezoelectric properties of PZT sol-gel composite thick films" des auteurs Bardaine et al. dans J. Sol-Gel Sci. Technol., 48 (2008), pages 135-142, divulgue l'application de films épais PZT sur des substrats de silicium et d'alumine à l'aide d'une préparation sol-gel composite.

L'article "Patterned crack-free PZT thick films for micro-electromechanical system applications" des auteurs Dauchy et al. dans Int. J. Adv. Manuf. Technol., 33 (2007), pages 86-94, a trait à la fabrication de structures multi-couches piézoélectriques à l'aide d'une technique sol-gel composite.

Des procédés de préparation de l'art antérieur se dégagent les inconvénients suivants :
- l'obtention de matériaux à base d'oxyde(s), qui peuvent ne pas adhérer suffisamment au substrat, sur lequel ils sont déposés ;
- l'obtention de matériaux à base d'oxyde(s), qui présentent des propriétés inhomogènes, lorsqu'ils sont déposés sur un substrat inapproprié (ce qui est le cas des substrats à porosité ouverte);
- l'obtention de matériaux, qui présentent une densité insuffisante, notamment s'ils sont destinés à être utilisés comme électrolytes ;
- une mise en oeuvre complexe : par exemple, l'addition d'un agent de cohésion organique, ou encore l'utilisation de solvants différents pour la mise en solution dudit agent de cohésion et pour la réalisation de la dispersion.

Les inventeurs se sont donc fixé pour objectif de fournir un procédé de préparation d'un matériau à base d'oxyde(s) d'élément(s) métallique(s) sur un substrat ne présentant pas les inconvénients des procédés de l'art antérieur et, notamment les inconvénients susmentionnés.

### EXPOSÉ DE L'INVENTION

Les inventeurs ont atteint l'objectif qu'ils s'étaient fixé par la présente invention qui a pour objet un procédé de préparation d'un matériau à base d'oxyde(s) d'élément(s) métallique(s) sur un substrat suivant la revendication 1.

Le procédé de l'invention permet de s'affranchir d'un certain nombre d'inconvénients des procédés de l'art antérieur, et notamment ceux découlant des documents [1], [2] et [3] mentionnés ci-dessus. En effet, la couche déposée en a) (dite, également, couche d'apprêt) permet d'obtenir une planarisation préalable du substrat avant mise en oeuvre de l'étape b), permettant ainsi l'utilisation de substrats de surface non homogène, par exemple ceux présentant une porosité ouverte. Ledit substrat présente ainsi une surface homogène, et l'adhérence de ladite dispersion au substrat est considérablement améliorée par l'intermédiaire de cette couche d'apprêt.

Selon l'invention, le procédé comprend, comme mentionné ci-dessus, une première étape a) de dépôt, par voie liquide, sur au moins une face de ce substrat, d'une couche d'une solution sol-gel précurseur du ou des oxyde(s) d'élément(s) métallique(s) constitutif(s) dudit matériau.

Le substrat utilisé dans le cadre du procédé de l'invention est un substrat à base d'oxyde(s) d'élément(s) métallique(s), plus particulièrement d'oxyde(s) de métaux de transition et/ou de lanthanide(s).

Un substrat particulier répondant à ces spécificités est un substrat comprenant une zircone dopée à l'yttrium (YSZ), éventuellement en mélange avec de l'oxyde de nickel NiO.

En particulier, le substrat peut être en un ou plusieurs oxydes d'élément(s) métallique(s) de composition identique au matériau préparé conformément à l'invention.

Le substrat consiste en un substrat composé de poudre(s) d'oxyde(s) d'élément(s) métallique(s) non frittée(s), c'est-à-dire un substrat qui n'a pas subi d'étape de frittage préalable, soit, en d'autres termes, au sens de l'invention, qui n'a pas subi d'étape de traitement thermique à une température supérieure à 200°C. Il peut s'agir notamment d'un substrat, ayant été obtenu à partir d'une encre (ce qui est le cas des substrats obtenus par sérigraphie) ou à partir d'une barbotine (ce qui est le cas des substrats obtenus par un procédé de coulage en bande).

Lorsque, à l'issue du procédé, l'ensemble constitué du substrat et du matériau est destiné à constituer un ensemble électrode-électrolyte, le substrat peut comprendre, sur l'une de ces faces (plus particulièrement celle destinée à servir de base à la mise en oeuvre des étapes a) et b) du procédé), une couche en un oxyde d'élément(s) métallique(s), apte à assurer le rôle de catalyseur de la réaction électrochimique souhaitée, cette couche remplissant ainsi le rôle de couche active. En particulier, lorsque l'ensemble est destiné à entrer, dans la constitution d'une cellule de pile SOFC, la couche active peut être en un oxyde d'élément métallique apte à remplir le rôle de catalyseur d'oxydation ou de réduction de l'hydrogène. Un oxyde d'élément métallique particulièrement adapté, pour remplir ce rôle, est l'oxyde de nickel(II) en mélange avec une zircone dopée par l'yttrium (intitulée YSZ).

Que ce soit pour la mise en oeuvre des étapes a) ou b), on peut envisager, parmi les techniques de dépôt par voie liquide :
- le trempage-retrait (« *dip coating* » en terminologie anglaise) ;
- l'enduction centrifuge (« *spin coating »* en terminologie anglaise) ;
- l'enduction laminaire (« *laminar flow coating* » ou « *meniscus coating* » en terminologie anglaise) ;
- la projection pneumatique (« *spray coating* » en terminologie anglaise) ;
- l'enduction à la racle (« *doctor-blade coating* » en terminologie anglaise).

La technique la plus avantageuse, parmi les techniques de dépôt par voie liquide citées ci-dessus, est la technique de trempage-retrait, qui permet l'obtention d'excellents résultats, et qui permet notamment d'effectuer des dépôts sur des substrats possédant une géométrie complexe et non nécessairement plane.

Ladite solution sol-gel, qui est déposée sous la forme d'une couche d'apprêt sur le substrat à l'issue de l'étape a), est avantageusement précurseur d'oxyde(s) d'élément(s) métallique(s), en particulier d'oxyde(s) de métaux de transition et/ou de lanthanide(s), tels que les oxydes choisis parmi l'oxyde de cérium et gadolinium (intitulé CGO), l'oxyde de cérium (CeO₂), la zircone dopée par l'yttrium (intitulée YSZ), la zircone dopée par le scandium (intitulée ScSZ), des oxydes apatites. De manière encore plus avantageuse, ladite solution sol-gel est précurseur de la céramique YSZ.

Ladite solution sol-gel utilisée dans le cadre de l'étape a) peut être une solution sol-gel du type colloïdal, c'est-à-dire une solution comprenant des espèces hydrolysées, précurseurs d'oxyde(s) d'élément(s) métallique(s), qui sont partiellement ou totalement condensées. Dans le cas où ces espèces sont partiellement condensées, on parlera de clusters ou oligomères et dans le cas où ces espèces sont totalement condensées, on parlera de nanoparticules cristallisées. En revanche, la solution sol-gel utilisée dans le cadre de l'étape a) n' est pas une solution composite, c'est-à-dire une solution sol-gel à laquelle il a été ajouté une poudre.

La solution sol-gel peut être préparée préalablement à l'étape de dépôt a), et en particulier peut être préparée à partir de précurseurs moléculaires métalliques ajoutés à un milieu comprenant un solvant organique ou aqueux et éventuellement d'autres additifs, tels que des agents stabilisants comme l'acétylacétone. Ces précurseurs moléculaires métalliques comprennent les éléments métalliques qui sont destinés à entrer dans la composition de la céramique oxyde constitutive du matériau. Ces précurseurs peuvent être des alcoxydes métalliques ou des sels métalliques. Le milieu comprenant un solvant organique est généralement un milieu alcoolique (par exemple, un milieu comprenant de l'éthanol et/ou du propanol), la fonction de ce milieu étant de solubiliser les précurseurs moléculaires. Le milieu peut être également un milieu aqueux.

Lorsqu'il s'agit de préparer une solution sol-gel précurseur d'un oxyde d'élément(s) métallique(s) du type YSZ, différents modes de réalisation peuvent être envisagés.

Selon un premier mode particulier de réalisation, une solution sol-gel peut être préparée, par mise en contact de précurseurs moléculaires à base d'yttrium et de zirconium avec au moins un solvant alcoolique. De préférence, ledit solvant alcoolique est un alcool aliphatique, comprenant de 2 à 3 atomes de carbone. À titre d'exemple, nous pouvons citer l'éthanol et le n-propanol.

Les précurseurs moléculaires à base d'yttrium et de zirconium peuvent être choisis parmi les composés organométalliques du zirconium tels que les alcoolates comportant un nombre d'atomes de carbone allant de 1 à 4. Par exemple, le précurseur moléculaire à base de zirconium utilisé peut être l'*iso*-propoxyde de zirconium (noté Zr(O*i*-Pr)₄). Le précurseur moléculaire à base d'yttrium peut être choisi parmi les sels minéraux d'yttrium. Par exemple, un précurseur de ce type peut être le nitrate d'yttrium hexahydraté.

À titre d'exemple, lorsque les précurseurs métalliques choisis sont l'*iso*-propoxyde de zirconium et le nitrate d'yttrium hexahydraté, la solution sol-gel peut être préparée selon un protocole comprenant la succession d'étapes suivante :
- la mise en contact de l'*iso*-propoxyde de zirconium, éventuellement en solution, avec un solvant organique tel qu'explicité précédemment, à une concentration fixée ;
- l'addition d'un composé organique permettant de limiter ultérieurement la réaction d'hydrolyse du précurseur de zirconium, ce composé étant, de préférence, un agent stabilisant tel que l'acétylacétone (symbolisé ci-après par « acac ») ;
- l'addition de nitrate d'yttrium hexahydraté, éventuellement en solution dans un solvant organique, dont la quantité est ajustée à la composition de la solution sol-gel en zirconium et yttrium ; la composition de la solution sol-gel obtenue est, par exemple, ZrO₂-8 mol% Y₂O₃;
- l'addition d'un mélange d'eau et d'un acide minéral, tel que l'acide chlorhydrique, afin d'amorcer les réactions d'hydrolyse et de condensation desdits précurseurs.

A titre d'exemple, les paramètres expérimentaux suivants : taux d'hydrolyse *h* = [H₂O]/[Zr(O*i*-Pr)₄], de complexation *x* = [acac]/[Zr(O*i*-Pr)₄] et de rapport d'acidité *h⁺* = [H⁺]/[Zr(O*i*-Pr)₄] sont prédéterminés. En particulier, h peut présenter une valeur inférieure à 10, notamment en vue d'obtenir une solution sol-gel comprenant des espèces moléculaires de taille allant de 1 à 4 nm.

La solution sol-gel obtenue à l'issue de ces étapes peut être amenée à subir une étape dite de mûrissement. Cette étape consiste à placer sous agitation, comme explicité précédemment, ladite solution sol-gel, pendant une durée suffisante jusqu'à obtention d'une solution sol-gel présentant une viscosité constante en fonction du temps, cette durée pouvant être d'une semaine. Au terme de cette étape de mûrissement, la solution sol-gel peut être conservée sans dégradation pendant plusieurs mois.

Une fois la stabilisation de la viscosité de la solution sol-gel observée, ladite solution sol-gel peut être amenée à subir une étape de dilution permettant d'accéder à des concentrations inférieures de la solution sol-gel précédemment préparée, ce qui facilite notamment l'utilisation ultérieure de cette solution sol-gel. Cette dilution, à un taux déterminé, permet d'une part d'ajuster la viscosité à une valeur donnée et d'autre part d'utiliser cette solution sol-gel pour effectuer, notamment des dépôts de ladite solution sol-gel sous forme de couches.

Le solvant de dilution doit être, de préférence, compatible avec le solvant de préparation de la solution sol-gel concentrée. De préférence, il peut être identique au solvant de préparation de ladite solution sol-gel.

Selon un second mode particulier de réalisation, une solution sol-gel à base d'yttrium et de zirconium est préparée dans un solvant aqueux, par mise en contact de précurseurs moléculaires à base d'yttrium et de zirconium dans ledit solvant aqueux. De préférence, ce solvant aqueux est l'eau.

Les précurseurs moléculaires à base d'yttrium et de zirconium mis en oeuvre pour la préparation de la solution sol-gel en milieu aqueux, peuvent être choisis de la manière suivante. Les précurseurs moléculaires à base de zirconium peuvent être choisis parmi les sels minéraux de zirconium. Par exemple, un précurseur moléculaire à base de zirconium utilisé est un sel minéral de zirconium tel que l'oxychlorure de zirconium octahydraté (noté ZrOCl₂·8H₂O). Les précurseurs moléculaires à base d'yttrium peuvent être choisis parmi les sels minéraux d'yttrium. Par exemple, un précurseur moléculaire à base d'yttrium utilisé est un sel minéral d'yttrium tel que le chlorure d'yttrium hexahydraté (noté YCl₃·6H₂O).

À titre d'exemple, lorsque les précurseurs métalliques choisis sont l'oxychlorure de zirconium octahydraté et le chlorure d'yttrium hexahydraté, la solution sol-gel peut être préparée selon un protocole comprenant la succession d'étapes suivante :
- la mise en contact desdits précurseurs dans de l'eau, précurseurs dont les quantités sont fixées de manière à obtenir un rapport [YCl₃·6H₂O]/[ZrOCl₂·8H₂O] de valeur prédéterminée ;
- l'addition d'un composé organique permettant de favoriser la précipitation des particules de YSZ, de préférence un composé tel que l'urée, dans une quantité de manière à obtenir un rapport [urée]/[ZrOCl₂·8H₂O] de valeur prédéterminée ;
- un traitement thermique à température et pression fixées, durant une période fixée ;
- un traitement physico-chimique du précipité obtenu, pouvant comporter des étapes parmi la centrifugation, la dialyse ; et
- la mise en dispersion du précipité ainsi traité dans de l'eau, suivie éventuellement d'un traitement de peptisation (par exemple, par ajout d'acide) et/ou d'un traitement de sonification.

L'on obtient à l'issue de ces étapes une solution comprenant des nanoparticules cristallisées présentant un diamètre moyen allant de 5 à 10 nm (mesuré par granulométrie laser) et pouvant comporter des concentrations très élevées de nanoparticules (par exemple, de l'ordre de 50%) sans former de gel.

Une fois l'étape a) réalisée, le procédé de l'invention comprend une étape b) de dépôt, par voie liquide, sur ladite couche déposée en a), d' une couche d'une dispersion comprenant une poudre d'oxyde(s) d'élément(s) métallique(s) et une solution sol-gel identique ou différente de celle utilisée dans l'étape a), ladite solution étant précurseur du ou des oxyde(s) d'élément(s) métallique(s) constitutif(s) dudit matériau et la poudre étant constituée d'oxyde(s) d'élément(s) métallique(s) constitutif(s) dudit matériau.

Ce dépôt est effectué par voie liquide, telle l'enduction centrifuge, l'enduction laminaire, le trempage-retrait, la projection pneumatique, l'enduction à la racle, de préférence par trempage-retrait. Cette opération de dépôt peut être répétée une ou plusieurs fois de manière à obtenir un empilement de couches présentant l'épaisseur souhaitée.

Au même titre que pour l'étape de dépôt a), l'étape de dépôt b) est mise en oeuvre, avantageusement, par trempage-retrait.

La solution sol-gel, constituant la base de la dispersion appliquée sur le substrat dans l'étape b) du procédé selon l'invention, peut être de composition identique à celle appliquée en tant que couche d'apprêt sur le substrat dans l'étape a) dudit procédé.

En utilisant une même solution sol-gel tout au long du procédé de l'invention, ceci permet de réduire le nombre de composés nécessaires à la préparation des solutions mises en oeuvre dans lesdites étapes a) et b) pour l'enduction dudit substrat, et notamment en s'affranchissant de l'introduction d'une matrice polymérique qui joue le rôle de couche d'apprêt qui a pour objectif, comme le suggèrent les documents [1], [2] et [3] de l'art antérieur cités précédemment, d'assurer une meilleure adhérence de la dispersion contenant l' (les) oxyde (s) métallique (s) .

Les poudres utilisées dans le cadre de cette étape peuvent présenter, avantageusement, un diamètre moyen de particules allant de 1 à 150 nm.

Les poudres utilisées dans le cadre de cette étape peuvent être de composition identique à celle du ou des oxydes d'élément(s) métallique(s) qui résulteront du traitement thermique de la solution sol-gel dans laquelle la poudre est mise en dispersion.

La poudre peut être incorporée dans la solution sol-gel à une teneur pouvant être aisément choisie par l'homme du métier en fonction de l'épaisseur de la couche de dispersion souhaitée.

La dispersion susmentionnée peut être préparée préalablement à l'étape de dépôt b).

Ladite dispersion déposée sous forme d' une couche sur le substrat est obtenue classiquement en dispersant une poudre d'oxyde(s) d'élément(s) métallique(s) dans une solution sol-gel précurseur d'oxyde(s) d'élément(s) métallique(s), la poudre constituant ainsi la phase de dispersion, tandis que la solution sol-gel constitue le milieu continu de la dispersion.

À cette dispersion peuvent être ajoutés des agents chimiques d'ajustement de la viscosité de ladite dispersion, et des agents chimiques permettant d'éviter une agglomération de ladite poudre dans cette dispersion. Dans ce cas, ces agents sont introduits directement dans la dispersion, sans dissolution préalable dans un solvant de dispersion de ces agents, comme le suggère le document [1] de l'art antérieur cité ci-dessus, ce qui permet de réduire le nombre de constituants chimiques nécessaires à la préparation de ladite dispersion.

La poudre est une poudre qui peut être disponible commercialement ou encore qui peut être préparée de manière préalable.

Ainsi, la poudre d'oxyde(s) d'élément(s) métallique(s) peut être préparée par des voies classiques de préparation des poudres, parmi lesquelles on peut citer la préparation par métallurgie des poudres, par voie liquide, telle que la technique sol-gel explicitée précédemment.

A titre d'exemple, ladite poudre est préparée à partir de la solution sol-gel dans laquelle la poudre est dispersée ultérieurement pour constituer la dispersion, après séchage, calcination et broyage de ladite solution sol-gel selon un protocole classique aisément déterminable par l'homme du métier.

La solution précurseur d'oxyde(s) d'élément(s) métallique(s) dans laquelle est dispersée la poudre, et pouvant également servir de base pour la préparation des poudres, est obtenue, comme son nom l'indique, par la technique sol-gel, plus précisément par solubilisation ou dissolution dans un milieu, organique ou aqueux d'un ou plusieurs précurseurs moléculaires, par exemple tel que cela a été défini pour l'étape a) pour les premier et second modes de réalisation (notamment lorsqu'il y a identité de composition entre la solution sol-gel de l'étape a) et la solution sol-gel de l'étape b)).

Ladite solution sol-gel peut être préparée dans un milieu organique ou aqueux, par exemple tel que cela est explicité plus haut pour la préparation de la solution sol-gel de l'étape a) selon les premier et second modes de réalisation.

Lorsque la solution sol-gel est préparée, en milieu organique, typiquement, dans un solvant organique alcoolique choisi de préférence parmi l'éthanol et le n-propanol, la solution sol-gel peut être présente, dans la dispersion réalisée dans l'étape b), à une concentration de 0,1 à 0,3 mole par litre dudit solvant organique. Selon ce même mode de réalisation, la poudre peut être incorporée dans la solution sol-gel à une teneur allant de 50 à 60% en masse de la masse totale de la dispersion.

Lorsque la solution sol-gel est préparée, en milieu aqueux, typiquement, dans un solvant aqueux, la poudre peut être incorporée dans la solution sol-gel à une teneur de sorte à obtenir un rapport volumique entre la poudre et les nanoparticules (contenues dans la solution sol-gel) compris entre 85/15 et 95/5.

La poudre, notamment lorsqu'il s'agit d'une poudre du type YSZ, et lorsqu'elle n'est pas commerciale, peut être préparée à partir d'une solution sol-gel dont la préparation est explicitée précédemment. Pour accéder à une poudre à partir d'une telle solution sol-gel, les étapes sont telles que celles explicitées plus haut, à savoir :
- une étape de gélification par hydrolyse de la solution sol-gel ;
- une étape de séchage à l'issue de laquelle l'on obtient un xérogel ;
- une étape de traitement thermique, pour obtenir une cristallisation dudit xérogel.

Quelle que soit la nature du milieu (organique ou aqueux) dans lequel la solution sol-gel est réalisée, la préparation de la dispersion utilisée dans l'étape b) du procédé selon l'invention, lorsqu'il s'agit de préparer un matériau du type YSZ, peut être réalisée dans ladite solution sol-gel selon un protocole comportant successivement les étapes suivantes :
- l'addition à ladite solution sol-gel, de manière directe et sans dispersion préalable dans un autre solvant, d'une poudre disponible commercialement ; par exemple, une poudre de YSZ présentant une composition ZrO₂-8 mol% Y₂O₃;
- l'addition d'un agent chimique, de préférence l'éthylène glycol, permettant d'ajuster la viscosité de ladite dispersion, en quantité prédéterminée ;
- l'addition d'un agent chimique, de préférence le dérivé polyéther de formule (I) dont la formule semi-développée est représentée ci-après (n = 9-10), 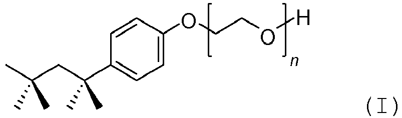 comme agent anti-agglomérant de la poudre de YSZ en solution ;
- une étape de mûrissement, au cours de laquelle la dispersion est placée sous agitation, comme explicité précédemment, durant un temps prédéterminé, jusqu'à obtention d'une dispersion présentant une viscosité constante en fonction du temps ; de préférence, ladite viscosité peut être comprise entre 1 et 40 cP. La dispersion obtenue est, de préférence, laissée sous agitation durant une période de 3 semaines.

L'ensemble constitué du substrat et des couches préalablement déposées est ensuite traité thermiquement, (étape c) de façon à transformer la solution sol-gel précurseur déposée en a) et la dispersion déposée en b) en ledit matériau à base d'oxyde(s) d'élément(s) métallique(s) souhaité.

Ce traitement thermique peut comprendre :
- une étape de séchage des couches à une température appropriée pour obtenir une gélification de celles-ci, cette température étant généralement inférieure à 100°C ;
- une étape de calcination à une température appropriée pour obtenir une cristallisation des couches déposées en un matériau à base d'oxyde(s) d'élément(s) métallique(s), cette température étant généralement supérieure à 150°C ;
- une étape de frittage à une température appropriée pour obtenir une densification du matériau, cette température étant généralement supérieure à 1200°C.

L'étape de séchage est destinée à assurer une gélification desdites couches déposées. Plus précisément, cette étape est destinée à assurer l'évaporation d'une partie du solvant utilisé dans la préparation de la solution sol-gel servant de milieu de dispersion continu, ce solvant pouvant être de nature aqueuse (de préférence, l'eau) ou organique (de préférence, l'éthanol ou le n-propanol) selon la voie de préparation envisagée. La température et la durée efficaces pour assurer le séchage peuvent être aisément déterminées par l'homme du métier à l'aide, par exemple, de la spectrophotométrie IR. Selon ce mode de réalisation particulièrement avantageux de l'invention, l'étape de séchage peut être effectuée à la température ambiante, pour une durée pouvant s'échelonner de 30 secondes à environ 30 minutes.

Une fois gélifiées, les couches subissent un traitement de calcination effectué à une température et une durée appropriées pour éliminer les produits organiques résultant des réactions de condensation lors de la formation du gel. La température de calcination est choisie de manière à permettre l'élimination des composés organiques de la couche déposée et, en particulier, le solvant de préparation et de dilution de la solution sol-gel et les composés organiques générés par la réaction des précurseurs moléculaires entre eux. Une température appropriée est une température pour laquelle l'on obtient des couches présentant un spectre infrarouge ne présentant plus de bandes d'absorption d'espèces carbonées. Selon ce mode de réalisation particulièrement avantageux de l'invention, l'étape de calcination peut être effectuée selon un cycle de température comprenant une température pouvant aller jusqu'à 700°C pendant une durée allant de 1 minute à 2 heures.

Enfin, les couches une fois calcinées sont amenées à subir une étape de frittage. Cette étape a pour but de permettre l'obtention d'un matériau cristallin dense. La température et la durée du frittage sont choisies de manière à obtenir cette cristallisation, vérifiable aisément par analyse structurale, telle que l'analyse par diffraction des rayons X.

Lorsqu'il s'agit de préparer un matériau du type YSZ, en particulier à partir de solutions sol-gel et des dispersions des modes de réalisation exposés ci-dessus, le frittage peut être effectué, sous charge de mousses de zircone yttriée 8YSZ, selon un protocole comportant successivement les étapes suivantes :
- partant d'une température de 150°C, un gradient de température de 120°C/h jusqu'à atteindre la température de 700°C ;
- un traitement à 700°C pendant 2 heures ;
- un gradient de température de 120°C/h jusqu'à atteindre la température de 1400°C ;
- un traitement à 1400°C pendant 10 heures ;
- et un gradient de température de -120°C/h jusqu'à atteindre la température ambiante.

Ainsi, grâce au procédé de l'invention appliqué à YSZ, impliquant un nombre d'étapes réduit par rapport à l'art antérieur, et mettant en oeuvre une solution sol-gel stable et une dispersion utilisant pour base de préparation ladite solution sol-gel, on a pu accéder à la préparation d'un matériau à base d'oxyde(s) d'élément(s) métallique(s) sur un substrat, ledit matériau présentant à la fois des propriétés de densité et d'homogénéité et pouvant se présenter sous forme d'un film d'épaisseur de 1 à 20 µm, de préférence de 5 à 20 µm.

L'ensemble obtenu conformément à l'invention peut constituer un ensemble électrolyte-électrode, dans lequel :
- l'électrolyte est constitué par les couches déposées conformément au procédé de l'invention et traitées thermiquement, cet électrolyte pouvant avoir une épaisseur allant de 5 à 20 µm;
- l'électrode est constituée par le substrat, par exemple, un substrat en NiO-YSZ.

Il peut être prévu une couche collectrice de courant sur cette électrode, qui sera déposée sur la face opposée à celle qui a servi de base de dépôt aux couches du procédé de l'invention, cette couche collectrice de courant pouvant être une couche en oxyde de nickel NiO déposée par sérigraphie.

Cet ensemble, utilisable notamment dans des piles du type SOFC ou encore dans les électrolyseurs à haute température, peut présenter les performances suivantes :
- une excellente étanchéité sur des surfaces supérieures à 10 cm², c'est-à-dire une tension en circuit ouvert de l'ordre de 1,2 V ;
- une puissance électrique supérieure à 200 mW/cm² à 850°C.

L'invention va maintenant être décrite par rapport à deux exemples particuliers de mise en oeuvre de l'invention, donnés à titre illustratif et non limitatif.

### EXPOSÉ DÉTAILLÉ DE MODES DE RÉALISATION PARTICULIERS

### Exemple 1.

Cet exemple illustre la préparation d'un matériau à base d'oxyde(s) d'élément(s) métallique(s) sur un substrat en NiO-YSZ selon le procédé de l'invention.

Pour ce faire, on procède à :
- la préparation, en milieu organique (n-propanol) d'une solution sol-gel précurseur d'une céramique de composition ZrO₂-8 mol% Y₂O₃ (sous-section 1.1) ;
- la préparation d'une dispersion comprenant une poudre céramique commerciale de composition ZrO₂-8 mol% Y₂O₃, et une solution sol-gel telle que définie ci-dessus (sous-section 1.2) ;
- les dépôts successifs de ladite solution sol-gel et de ladite dispersion sur le substrat suivi d'un traitement thermique (sous-section 1.3).

### 1.1. Préparation d'une solution sol-gel précurseur d'une céramique oxyde YSZ de composition ZrO₂-8 mol% Y₂O₃.

Dans cette partie, on illustre la préparation d'une solution précurseur de céramique YSZ de composition ZrO₂-8mol% Y₂O₃ dans le n-propanol, à partir d'un précurseur de zirconium, introduit sous la forme d'un alcoxyde, et à partir d'un précurseur d'yttrium, introduit sous la forme d'un nitrate.

L'alcoxyde de zirconium utilisé est l'*iso-*propoxyde de zirconium commercial de concentration 70% massique dans le n-propanol (fourni par Aldrich). Le nitrate d'yttrium est sous forme d'hexahydrate (99,8%, fourni par Aldrich).

De l'*iso*-propoxyde de zirconium (symbolisé ci-après Zr(O*i*-Pr)₄) à 70% en solution dans le *n*-propanol (18,9 mL) est dissous dans le n-propanol (125 mL), de sorte à obtenir une concentration de cette solution en *iso*-propoxyde de zirconium de 0,2 M.

De l'acétylacétone (symbolisé ci-après acac) (98%, fourni par Fluka) (3,4 g) est ajouté avant hydrolyse pour limiter la forte réactivité entre le précurseur *iso*-propoxyde et l'eau. Une réaction légèrement exothermique apportant une coloration jaune à la solution est observée, suite à la réaction entre l'acétylacétone et l'*iso*-propoxyde de zirconium.

Du nitrate d'yttrium hexahydraté (symbolisé ci-après Y (NO₃)₃·6H₂O)(2,8 g) dans du n-propanol (50 mL) est ajouté, de sorte à obtenir une solution de composition ZrO₂-8% mol Y₂O₃, suivi de l'introduction d'un mélange d'eau déionisée (1,4 mL) et d'acide chlorhydrique à 37% en solution aqueuse (0,1 mL) pour amorcer l'hydrolyse et la condensation.

Dans cet exemple de réalisation, la solution sol-gel obtenue, de composition ZrO₂-8 mol% Y₂O₃, est maintenue sous agitation durant une journée à température ambiante.

Selon ce mode particulier de réalisation, les paramètres de taux d'hydrolyse *h* = [H₂O]/[Zr(O*i-*Pr)₄], de complexation *x* = [acac]/[Zr(O*i*-Pr)₄] et de rapport d'acidité *h⁺* = [H⁺]/[Zr(O*i*-Pr)₄] prennent respectivement les valeurs suivantes : *h* = 2,8 ; *x* = 0, 8 ; *h⁺* = 0,8.

### 1.2. Préparation de la dispersion dans le n-propanol.

Dans cette partie, on illustre la préparation, en milieu organique, de la dispersion susmentionnée.

A la solution sol-gel préparée selon 1.1 (140 g) est ajoutée une poudre céramique commerciale de composition ZrO₂-8 mol% Y₂O₃ (fourni par Tosoh sous la dénomination TS-8YS) (180 g), moyennant quoi la dispersion obtenue comporte 56% en masse de poudre commerciale et 44% en masse de solution sol-gel.

De l'éthylène glycol (éthane-1,2-diol) (fourni par Sigma-Aldrich) (5% en masse de la dispersion) (14,4 mL) est ajouté à la dispersion pour ajuster la viscosité du mélange. Un dérivé polyéther de formule (I) précédemment explicité (Triton® X-100, 0,5% en masse de la dispersion) (fourni par Sigma-Aldrich) (1,6 g), est ensuite additionné dans le mélange pour éviter l'agglomération des différents constituants du mélange.

La dispersion obtenue est ensuite placée sous agitation à température ambiante.

En parallèle, il est procédé à la préparation d'une dispersion comporte 51% en masse de poudre commerciale et 49% en masse de solution sol-gel.

### 1.3. Dépôts successifs de la solution sol-gel et de la dispersion préparées dans le n-propanol et traitement thermique.

Dans cette partie sont illustrées les étapes de dépôt sur un support YSZ-NiO (fourni par HC-Starck) de la solution sol-gel et de la dispersion préparées dans le *n*-propanol, conformément aux protocoles des sous-sections 1.1. et 1.2.

Des étapes préalables de préparation de ce support ont été effectuées.

À cet effet, en premier lieu, une couche de NiO-YSZ d'une épaisseur de 10 µm est appliquée, à partir d'une encre, par sérigraphie sur une première face dudit support, cette couche ayant pour fonction de remplir le rôle de couche active d'électrode.

Les encres de sérigraphie sont préparées, dans un milieu à base de terpinéol (30% en masse), à partir d'un mélange de poudre commerciale (70% en masse) de YSZ et NiO (respectivement 65% NiO-35% YSZ) (pour l'encre destinée au dépôt de la couche active).

Les dépôts sont réalisés par la technique de trempage-retrait.

Le dépôt d'une couche de la solution sol-gel obtenue dans la sous-section 1.1, solution concentrée à 0,2 M dans le *n*-propanol, est réalisé par trempage-retrait du substrat à raison d'une vitesse de 1 cm.min⁻¹ pendant 1 minute.

Le substrat ainsi revêtu est ensuite soumis, de nouveau, à un trempage-retrait dans la dispersion préparée à la sous-section 1.2. à raison d'une vitesse de 1 cm.min⁻¹ pendant 1 minute (un essai avec la dispersion à 56% et un essai avec la dispersion à 51%).

Le substrat ainsi obtenu est ensuite séché à température ambiante pendant 5 minutes puis calciné à l'étuve (150°C) pendant 10 minutes.

Le substrat est alors soumis à un traitement thermique de densification sous charge (mousses de zircone yttriée 8YSZ), dans un four, comprenant successivement les étapes suivantes :
- partant de la température ambiante, un gradient de température de 120°C/h jusqu'à atteindre la température de 700°C ;
- un traitement à 700°C pendant 2 heures ;
- un gradient de température de 120°C/h jusqu'à atteindre la température de 1400°C ;
- un traitement à 1400°C pendant 10 heures ; et
- un gradient de température de -120°C/h jusqu'à atteindre la température ambiante.

A l'issue de ce traitement thermique, l'ensemble obtenu comporte :
- le substrat susmentionné ;
- un matériau dense revêtant la première face du substrat, se présentant sous forme d'un film issu du traitement thermique de la première couche déposée et de la deuxième couche déposée.

A l'issue du traitement thermique, est déposée une couche collectrice de courant à base d'oxyde de nickel (II) (NiO) (18 µm) par sérigraphie, à partir d'une encre, sur une deuxième face dudit support opposée à ladite première face, ladite encre étant réalisée à partir d'une poudre commerciale de NiO (pour l'encre destinée au dépôt de la couche collectrice de courant) et d'un dispersant de type phosphate-ester (par exemple, CP213®) (selon une proportion de 1,5% massique par rapport à la masse de poudre).

### 1.4. Mesure de l'épaisseur des couches déposées.

L'épaisseur de film obtenu en fonction de la dispersion utilisée est mesurée par microscopie à balayage. Les résultats sont consignés dans le Tableau 1 ci-après.

**Tableau 1.**

| Pourcentage massique de poudre céramique commerciale de composition ZrO₂-8 mol% Y₂O₃ dans la dispersion (%) | Épaisseur des couches déposées (µm) |
|---|---|
| 51 | 8 |
| 56 | 20 |

Un lien de dépendance entre l'épaisseur de film et le pourcentage massique de poudre céramique commerciale, de composition ZrO₂-8 mol% Y₂O₃, dans la dispersion, peut être établi. Cette épaisseur croît avec un pourcentage massique plus important.

Il ressort de ces mesures que la variation de ce pourcentage permet de contrôler la viscosité de la dispersion, et ainsi, l'épaisseur des couches déposées sur le substrat.

### Exemple 2.

Cet exemple illustre la préparation d'un matériau à base d'oxyde(s) d'élément(s) métallique(s) sur un substrat en NiO-YSZ selon le procédé de l'invention.

Pour ce faire, on procède à :
- la préparation, en milieu aqueux d'une solution sol-gel précurseur d'une céramique de composition ZrO₂-8 mol% Y₂O₃ (sous-section 2.1) ;
- la préparation d'une dispersion comprenant une poudre céramique commerciale de composition ZrO₂-8 mol% Y₂O₃, et une solution sol-gel telle que définie ci-dessus (sous-section 2.2) ;
- les dépôts successifs de ladite solution sol-gel et de ladite dispersion sur le substrat suivi d'un traitement thermique (sous-section 2.3).

### 2.1. Préparation d'une solution sol-gel stable précurseur d'une céramique oxyde YSZ de composition ZrO₂-8 mol% Y₂O₃ dans l'eau.

Dans cette partie, on illustre la préparation d'une solution précurseur de céramique YSZ de composition ZrO₂-8mol% Y₂O₃ dans l'eau, à partir d'un précurseur de zirconium, introduit sous la forme d'un oxychlorure, et à partir d'un précurseur d'yttrium, introduit sous la forme d'un chlorure.

L'oxychlorure de zirconium utilisé est ZrOCl₂·8H₂O (99,5% fourni par Merck) (nommé également oxychlorure de zirconium octahydraté et le chlorure d'yttrium utilisé est YCl₃·6H₂O (99,99% fourni par Aldrich) (nommé également chlorure d'yttrium hexahydraté) .

De l'oxychlorure de zirconium octahydraté (75 g) et du chlorure d'yttrium hexahydraté (11,2 g) sont dissous dans l'eau (140 mL), en respectant un rapport [YCl₃·6H₂O]/[ZrOCl₂·8H₂O] = 8/92, de sorte à formée de l'oxyde ZrO₂-8% mol. Y₂O₃. De l'urée (20 g) est ajoutée à la solution pour favoriser la précipitation des particules de YSZ, dans les proportions suivantes en rapport au sel de zirconium : [urée]/[ZrOCl₂·8H₂O] = 1,4.

Le mélange est introduit dans un récipient en verre puis dans un autoclave chauffé sous pression, à une température de 180°C (pression correspondante : 18 bars) pendant 4 heures. Un précipité blanc de YSZ se forme alors dans l'autoclave, lequel est séparé du surnageant par centrifugation, nettoyé par une succession de dialyses dans l'eau distillée, afin d'éliminer les sels encore présents, avant d'être dilué dans l'eau pour obtention de la concentration désirée.

Il s'ensuit une étape de stabilisation de la solution sol-gel par peptisation jusqu'à un pH valant 2 en présence d'acide chlorhydrique à 37% en solution aqueuse. Une étape finale de sonification, effectuée durant plusieurs heures à l'aide de sonotrodes, permet l'obtention d'une solution sol-gel de composition ZrO₂-8 mol% Y₂O₃. Dans cet exemple, des photographies effectuées par microscopie électronique en transmission (MET, « *TEM* » en terminologie anglaise) révèlent l'obtention de nanoparticules cristallisées de YSZ de taille comprise entre 5 et 10 nm.

### 2.2. Préparation de la dispersion dans l'eau.

Dans cette partie, on illustre la préparation, en milieu aqueux, de la dispersion susmentionnée.

A la solution sol-gel préparée selon 2.1 (271 mL) est ajoutée une poudre céramique commerciale de composition ZrO₂-8 mol% Y₂O₃ (fournie par Tosoh sous la dénomination TS-8YS) (500 g), moyennant quoi on obtient une dispersion comprenant 21% en masse de solution sol-gel.

De l'éthylène glycol (éthane-1,2-diol) (fourni par Sigma-Aldrich) (5% en masse de la dispersion) (37 mL) est ajouté à la dispersion pour ajuster la viscosité du mélange. Un dérivé polyéther de formule (I) précédemment explicité (Triton® X-100, 0,5% en masse de la dispersion) (fourni par Sigma-Aldrich) (4,1 g), est ensuite additionné dans le mélange pour éviter l'agglomération des différents constituants du mélange.

La dispersion obtenue est ensuite placée sous agitation à température ambiante.

Le rapport massique poudre commerciale/nanoparticules est fixé à 90/10.

### 2.3. Dépôt de la solution sol-gel et de la dispersion préparées dans l'eau.

Dans cette partie sont illustrées les étapes de dépôt sur support de la solution sol-gel et de la dispersion préparées dans l'eau, conformément aux protocoles des sous-sections 2.1. et 2.2 suivies d'un traitement thermique.

Une étape préalable de préparation des supports, dont le protocole est identique à celui exposé dans la sous-section 1.3., est réalisée.

Les dépôts sont réalisés par la technique de trempage-retrait. Le dépôt d'une couche de la solution sol-gel obtenue dans la sous-section 2.1., dont les effets de concentration seront étudiés à la sous-section 2.4., est réalisé par trempage-retrait du substrat à raison d'une vitesse de 1 cm.min⁻¹ pendant 1 minute.

Les protocoles de trempage-retrait du substrat dans la dispersion préparée en milieu aqueux conformément à la sous-section 2.2., ainsi que ceux de traitement thermique sont identiques à ceux mis en oeuvre dans la sous-section 1.3.

A l'issue de ce traitement thermique, l'ensemble obtenu comporte :
- le substrat susmentionné ;
- un matériau dense revêtant la première face du substrat, se présentant sous forme d'un film issu du traitement thermique de la première couche déposée et de la deuxième couche déposée.

### 2.4. Mesure de l'épaisseur des couches déposées.

L'épaisseur de film obtenu en fonction de la dispersion utilisée est mesurée par microscopie à balayage.

Les résultats sont consignés dans le Tableau 2 ci-après.

**Tableau 2.**

| Pourcentage volumique d'eau dans la dispersion (%) | Épaisseur des couches déposées (µm) |
|---|---|
| 65 | 10 |
| 35 | 32 |

Un lien de dépendance entre l'épaisseur des couches déposées et le pourcentage volumique d'eau dans la dispersion, peut être établi. Cette épaisseur croît avec un pourcentage volumique moins important.

Il ressort de ces mesures que la variation de ce pourcentage, par dilution de la dispersion avec de l'eau, ou au contraire par concentration de celle-ci, permet de contrôler la viscosité de cette dispersion, et ainsi, l'épaisseur des couches déposées sur le substrat. Les couches préparées sont denses, homogènes en épaisseur et ne présentent pas de fissures.

## Revendications

1. Procédé de préparation d'un matériau à base d'oxyde(s) d'élément(s) métallique(s) sur un substrat, ledit substrat étant composé de poudre(s) d'oxyde(s) d'élément(s) métallique(s) non frittée(s), ce procédé étant constitué par les étapes successives suivantes :
a) déposer, par voie liquide, sur une face de ce substrat, une couche d'une solution sol-gel précurseur du ou des oxyde(s) d'élément(s) métallique(s) constitutif(s) dudit matériau, ladite solution sol-gel n'étant pas une solution composite ;
b) déposer, par voie liquide, sur ladite couche déposée en a), une couche d'une dispersion comprenant une poudre d'oxyde(s) d'élément(s) métallique(s) et une solution sol-gel identique ou différente de celle utilisée dans l'étape a), ladite solution étant précurseur du ou des oxyde(s) d'élément(s) métallique(s) constitutif(s) dudit matériau et la poudre étant constituée d'oxyde(s) d'élément(s) métallique(s) constitutif(s) dudit matériau ; et
c) traiter thermiquement lesdites couches déposées en a) et b) en vue de les transformer en ledit matériau.

2. Procédé selon la revendication 1, dans lequel le matériau à base d'oxyde(s) d'élément(s) métallique(s) est un matériau à base d'oxyde(s) de métaux de transition et/ou de lanthanide(s).

3. Procédé selon la revendication 1 ou 2, dans lequel le matériau à base d'oxyde(s) d'élément(s) métallique(s) est à base d'oxyde(s) choisi(s) parmi l'oxyde de cérium et gadolinium, l'oxyde de cérium, la zircone dopée par l'yttrium (intitulée YSZ), la zircone dopée par le scandium et des oxydes apatites.

4. Procédé selon l'une quelconque des revendications précédentes, dans lequel le substrat est un substrat à base d'oxyde(s) de métaux de transition et/ou de lanthanide(s).

5. Procédé selon l'une quelconque des revendications précédentes, dans lequel le substrat est en un ou plusieurs oxyde(s) d'élément(s) métallique(s) de composition identique au matériau préparé selon le procédé selon l'une quelconque des revendications précédentes.

6. Procédé selon l'une quelconque des revendications précédentes, dans lequel le substrat est en zircone dopée à l'yttrium (YSZ), éventuellement en mélange avec de l'oxyde de nickel NiO.

7. Procédé selon l'une quelconque des revendications précédentes, dans lequel le substrat est obtenu par sérigraphie à partir d'une encre, ou par un procédé de coulage en bande à partir d'une barbotine.

8. Procédé selon l'une quelconque des revendications précédentes, dans lequel ladite solution sol-gel de l'étape a) est une solution sol-gel du type colloïdal.

9. Procédé selon l'une quelconque des revendications précédentes, dans lequel l'étape a) et/ou l'étape b) est(sont) réalisée(s) par trempage-retrait.

10. Procédé selon l'une quelconque des revendications précédentes, dans lequel la solution sol-gel est préparée à partir de précurseurs moléculaires métalliques ajoutés à un milieu comprenant un solvant organique ou aqueux.

11. Procédé selon la revendication 10, dans lequel, lorsque la solution sol-gel est précurseur de zircone dopée à l'yttrium (YSZ), celle-ci est préparée par mise en contact d'un précurseur moléculaire à base d'yttrium, tel que le nitrate d'yttrium hexahydraté, et d'un précurseur moléculaire à base de zirconium, tel que l'*iso*-propoxyde de zirconium, avec au moins un solvant alcoolique.

12. Procédé selon la revendication 10, dans lequel, lorsque la solution sol-gel est précurseur de zircone dopée à l'yttrium (YSZ), celle-ci est préparée par mise en contact d'un précurseur moléculaire à base d'yttrium, tel que le chlorure d'yttrium hexahydraté, et un précurseur moléculaire à base de zirconium, tel que l'oxychlorure de zirconium octahydraté, dans un solvant aqueux.

13. Procédé selon l'une quelconque des revendications précédentes, dans lequel la solution sol-gel comprise dans la dispersion de l'étape b) est identique à la solution sol-gel de l'étape a).

14. Procédé selon l'une quelconque des revendications précédentes, dans lequel la dispersion utilisée à l'étape b) est préparée par mise en suspension de la poudre d'oxyde(s) d'élément(s) métallique(s) dans la solution sol-gel.

15. Procédé selon l'une quelconque des revendications précédentes, dans lequel le matériau se présente sous forme d'un film présentant une épaisseur allant de 1 à 20 µm.

16. Procédé selon l'une quelconque des revendications précédentes, dans lequel le matériau formé sur le substrat est un ensemble électrode-électrolyte pour pile SOFC.

## Patentansprüche

1. Verfahren zur Herstellung eines Materials auf Basis eines Metallelementoxids / von Metallelementoxiden auf einem Substrat, wobei das Substrat gebildet ist durch (ein) nichtgesinterte(s) Pulver eines Metallelementoxids / von Metallelementoxiden, wobei dieses Verfahren durch die folgenden aufeinanderfolgenden Schritte gebildet ist:
a) Aufbringen einer Schicht einer Sol-Gel-Präkursorlösung des oder der Metallelementoxids/Metallelementoxide, das/die Bestandteil des Materials ist/sind, auf einer Fläche dieses Substrats auf flüssigem Weg, wobei die Sol-Gel-Lösung keine Verbundlösung ist;
b) Aufbringen, auf der in a) aufgebrachten Schicht und auf flüssigem Weg, einer Schicht einer Dispersion, umfassend ein Pulver eines Metallelementoxids / von Metallelementoxiden und eine Sol-Gel-Lösung identisch zu oder verschieden von jener, die im Schritt a) verwendet wird, wobei die Lösung ein Präkursor des Metallelementoxids / der Metallelementoxide ist, das/die Bestandteil des Materials ist/sind, und wobei das Pulver aus (einem) Metallelementoxid(en) gebildet ist, das/die Bestandteil des Materials ist/sind; und
c) thermisches Behandeln der in a) und b) aufgebrachten Schichten in Hinblick auf ihre Umwandlung in das Material.

2. Verfahren nach Anspruch 1, bei dem das Material auf Basis eines Metallelementoxids / von Metallelementoxiden ein Material auf Basis eines Übergangsmetalloxids / von Übergangsmetalloxiden und/oder eines Lanthanidoxids / von Lanthanidoxiden ist.

3. Verfahren nach Anspruch 1 oder 2, bei dem das Material auf Basis eines Metallelementoxids / von Metallelementoxiden auf Basis eines Oxids / von Oxiden ist, ausgewählt aus Cerium- und Gadoliniumoxid, Ceriumoxid, Zirkon dotiert mit Yttrium (genannt YSZ), Zirkon dotiert mit Scandium und Apatitoxiden.

4. Verfahren nach einem der vorhergehenden Ansprüche, bei dem das Substrat ein Substrat auf Basis eines Übergangsmetalloxids / von Übergangsmetalloxiden und/oder eines Lanthanidoxids / von Lanthanidoxiden ist.

5. Verfahren nach einem der vorhergehenden Ansprüche, bei dem das Substrat aus einem oder mehreren Metallelementoxid(en) mit einer Zusammensetzung ist, die identisch zu dem Material ist, das gemäß dem Verfahren nach einem der vorhergehenden Ansprüche hergestellt ist.

6. Verfahren nach einem der vorhergehenden Ansprüche, bei dem das Substrat aus Zirkon dotiert mit Yttrium (YSZ) ist, gegebenenfalls in Mischung mit Nickeloxid NiO.

7. Verfahren nach einem der vorhergehenden Ansprüche, bei dem das Substrat durch Siebdruck ausgehend von einer Tinte erhalten ist, oder durch ein Bandgießverfahren ausgehend von einer Schlämme.

8. Verfahren nach einem der vorhergehenden Ansprüche, bei dem die Sol-Gel-Lösung des Schritts a) eine Sol-Gel-Lösung vom kolloidalen Typ ist.

9. Verfahren nach einem der vorhergehenden Ansprüche, bei dem der Schritt a) und/oder der Schritt b) durch Tauchziehen realisiert ist/sind.

10. Verfahren nach einem der vorhergehenden Ansprüche, bei dem die Sol-Gel-Lösung ausgehend von molekularen metallischen Präkursoren hergestellt wird, die zu einer Umgebung hinzugefügt werden, die ein organisches oder wässriges Lösungsmittel umfasst.

11. Verfahren nach Anspruch 10, bei dem dann, wenn die Sol-Gel-Lösung ein Präkursor von Zirkon dotiert mit Yttrium (YSZ) ist, diese hergestellt wird durch Inkontaktbringen eines molekularen Präkursors auf Basis von Yttrium, wie zum Beispiel Yttriumnitrat-Hexahydrat, und eines molekularen Präkursors auf Basis von Zirkon, wie zum Beispiel Zirkonisopropoxyd, mit wenigstens einem alkoholischen Lösungsmittel.

12. Verfahren nach Anspruch 10, bei dem dann, wenn die Sol-Gel-Lösung ein Präkursor von Zirkon dotiert mit Yttrium (YSZ) ist, diese hergestellt wird durch Inkontaktbringen eines molekularen Präkursors auf Basis von Yttrium, wie zum Beispiel Yttriumchlorid-Hexahydrat, und eines molekularen Präkursors auf Basis von Zirkon, wie zum Beispiel Zirkonoxychlorid-Oktahydrat, in einem wässrigen Lösungsmittel.

13. Verfahren nach einem der vorhergehenden Ansprüche, bei dem die Sol-Gel-Lösung, die in der Dispersion des Schritts b) enthalten ist, identisch zu der Sol-Gel-Lösung des Schritts a) ist.

14. Verfahren nach einem der vorhergehenden Ansprüche, bei dem die im Schritt b) verwendete Dispersion hergestellt wird, indem das Pulver von Metallelementoxid(en) in Suspension in der Sol-Gel-Lösung gebracht wird.

15. Verfahren nach einem der vorhergehenden Ansprüche, bei dem das Material die Form eines Films aufweist, der eine Dicke von 1 bis 20 µm hat.

16. Verfahren nach einem der vorhergehenden Ansprüche, bei dem das auf dem Substrat gebildete Material eine Elektrode-Elektrolyt-Anordnung für eine SOFC-Zelle ist.

## Claims

1. Method for preparing a material based on oxide(s) of metal element(s) on a substrate, said substrate being composed of non-sintered powder(s) of metal element(s) oxides(s), this method consisting of the following successive steps:
a) depositing, by liquid means, on one face of this substrate, one layer of a sol-gel precursor solution of the constituent metal element(s) oxide(s) of said material, said sol-gel solution being not a composite solution;
b) depositing, by liquid means, on said layer deposited in a), one layer of a dispersion comprising a powder of metal element(s) oxide(s) and a sol-gel solution identical to or different from that used in step a), said solution being a precursor of the constituent metal element(s) oxide(s) of said material and the powder consisting of constituent metal element(s) oxide(s) of said material;
c) heat treating said layers deposited in a) and b) in order to transform them into said material.

2. Method according to claim 1, in which the material based on metal element(s) oxide(s) is a material based on oxide(s) of transition metals and/or lanthanide(s).

3. Method according to claim 1 or 2, in which the material based on metal element(s) oxide(s) is based on oxide(s) selected from cerium and gadolinium oxide, cerium oxide, zirconia doped with yttrium (entitled YSZ), zirconia doped with scandium and apatite oxides.

4. Method according to any of the preceding claims, in which the substrate is a substrate based on oxide(s) of transition metals and/or lanthanides(s).

5. Method according to any of the preceding claims, in which the substrate is made of one or more metal element(s) oxide(s) of composition identical to the material prepared according to the method according to any of the preceding claims.

6. Method according to any of the preceding claims, in which the substrate is made of zirconia doped with yttrium (YSZ), potentially mixed with nickel oxide NiO.

7. Method according to any of the preceding claims, in which the substrate is obtained by serigraphy from an ink or by a tape casting method from a slurry.

8. Method according to any of the preceding claims, in which said sol-gel solution of step a) is a sol-gel solution of colloidal type.

9. Method according to any of the preceding claims, in which step a) and/or step b) is (are) carried out by dip coating.

10. Method according to any of the preceding claims, in which the sol-gel solution is prepared from metallic molecular precursors added to a medium comprising an organic or aqueous solvent.

11. Method according to claim 10, in which, when the sol-gel solution is a precursor of zirconia doped with yttrium (YSZ), this is prepared by placing in contact a yttrium based molecular precursor, such as hexahydrated yttrium nitrate, and a zirconium based molecular precursor, such as zirconium iso-propoxide, with at least one alcoholic solvent.

12. Method according to claim 10, in which, when the sol-gel solution is a zirconia precursor doped with yttrium (YSZ), this is prepared by placing in contact a yttrium based molecular precursor, such as hexahydrated yttrium chloride, and a zirconium based molecular precursor, such as octahydrated zirconium oxychloride, in an aqueous solvent.

13. Method according to any of the preceding claims, in which the sol-gel solution comprised in the dispersion of step b) is identical to the sol-gel solution of step a).

14. Method according to any of the preceding claims, in which the dispersion used in step b) is prepared by suspending a powder of metal element(s) oxide(s) in the sol-gel solution.

15. Method according to any of the preceding claims, in which the material is in the form of a film having a thickness ranging from 1 to 20 µm.

16. Method according to any of the preceding claims, in which the material formed on the substrate is an electrode-electrolyte assembly for SOFC cell.
